# FASCICULE DE BREVET EUROPEEN

(11) **EP 1 065 771 B1**
(45) Date de publication et mention de la délivrance du brevet: **30.07.2008**
(21) Numéro de dépôt: 00420141.4
(22) Date de dépôt: 27.06.2000
(51) Int. Cl.: H02G 3/04

(54) **Barreau ou montant pour échelle à câbles, échelle à câbles et son procédé de montage**
Sprosse oder Holm für Kabelleiter, Kabelleiter und Montageverfahren
Rung or rail for cable ladder, cable ladder and mounting method

(30) Priorité: 28.06.1999 FR 9908433
(43) Date de publication de la demande: 03.01.2001
(73) Titulaire: Gewiss France SA, 21430 Liernais (FR)
(72) Inventeur: Simon, Bernard, 69300 Caluire (FR)
(74) Mandataire: Myon, Gérard Jean-Pierre

(56) Documents cités:
- DE-A- 3 829 306
- DE-U- 7 820 462
- US-A- 3 355 132

## Description

L'invention a trait à un barreau ou à un montant pour échelle à câbles, à une échelle à câbles et à son procédé de montage. (Voir les documents DE-U-7820462 et DE-A-3829306).

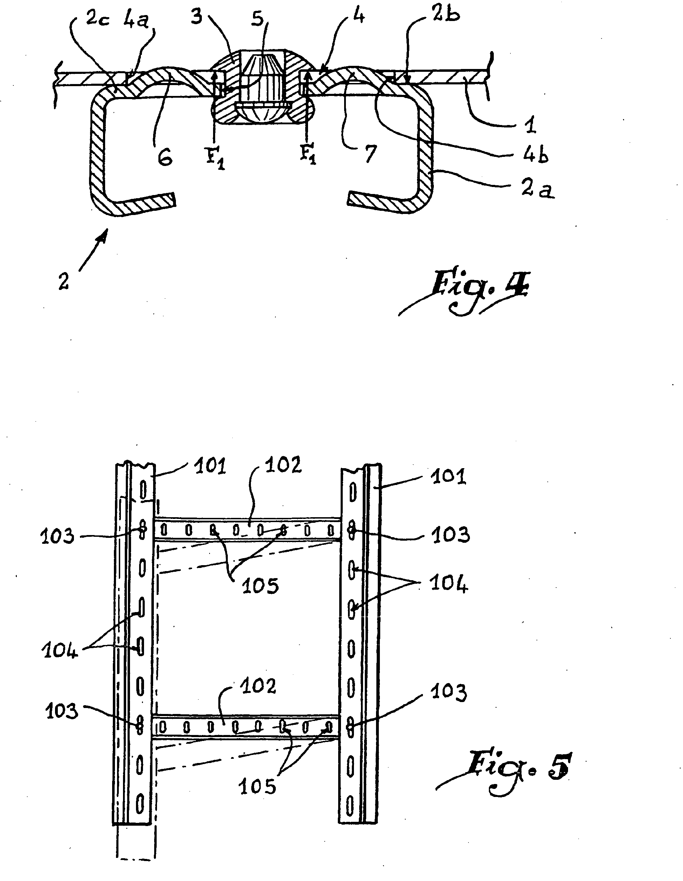

Comme il ressort de la figure 5 ci-annexée, il est connu de réaliser une échelle à câbles pour le support de câbles électriques, dans une configuration verticale ou horizontale en assemblant des montants latéraux ou limons 101 et des barreaux ou traverses 102, ces barreaux s'étendant principalement selon une direction globalement perpendiculaire à celle des montants. L'assemblage entre ces montants et barreaux est réalisé au moyen de vis ou rivets 103 qui permettent une immobilisation des barreaux et des vis selon une direction perpendiculaire au plan de la figure 5. Il est d'usage de prévoir dans les montants 101 des perforations oblongues 104 et dans les barreaux 102 des perforations oblongues 105 qui permettent, d'une part, le passage des vis 103 et, d'autre part, le passage de liens d'attache des câbles qui ne sont pas représentés à la figure 5. Comme il ressort dans la comparaison des configurations en traits pleins et en traits mixtes à la figure 5, il est possible de faire pivoter les barreaux 102 par rapport aux montants 101 parallèlement au plan de la figure 5, de telle sorte que l'échelle peut être déformée, ce qui est à la fois inesthétique et peut conduire à des mouvements parasites de l'échelle. En outre, dans la configuration connue, les vis ou rivets 103 sont soumis à un effort de cisaillement intense qui peut conduire à leur rupture.

C'est à ces inconvénients qu'entend plus particulièrement remédier l'invention en proposant une structure de barreau qui permet un assemblage particulièrement solide avec des montants connus, sans risque de déformation de l'échelle qu'il permet de réaliser et avec une forte diminution de l'effort de cisaillement subi par un organe de fixation.

Dans cet esprit, l'invention concerne un barreau pour échelle à câbles comprenant au moins un orifice de passage d'un organe de fixation sur un montant, caractérisé en ce qu'il comprend également deux reliefs disposés de part et d'autre de cet orifice et aptes à être engagés dans une perforation oblongue du montant dans lequel est reçu l'organe de fixation.

Grâce à l'invention, les reliefs permettent de centrer l'orifice de passage prévu dans le barreau par rapport à la perforation oblongue prévue dans le montant et de créer ainsi plusieurs points de contact entre le barreau et le bord de la perforation oblongue, de telle sorte qu'un pivotement du barreau autour de l'axe de l'organe de fixation peut être évité. Les reliefs peuvent porter contre les bords de la perforation oblongue, de telle sorte qu'ils absorbent l'essentiel des efforts de cisaillement que subit la jonction entre le barreau et le montant. L'organe de fixation, qui peut être une vis ou un rivet, est d'autant moins sollicité en cisaillement.

L'invention est également applicable en inversant la structure décrite ci-dessus, auquel cas elle concerne un montant pour échelle à câbles qui comprend au moins un orifice de passage d'un organe de fixation avec un barreau et deux reliefs disposés de part et d'autre de cet orifice et aptes à être engagés dans une perforation oblongue du barreau dans laquelle est reçu l'organe de fixation.

Comme précédemment, les reliefs participent au centrage et à la reprise d'effort entre le barreau et le montant.

Quelle que soit la variante considérée, les reliefs sont avantageusement formés par des bossages obtenus par déformation localisée d'un voile du barreau ou du montant. Ces reliefs sont ainsi particulièrement économiques, alors qu'ils peuvent résister à des efforts conséquents.

Selon un aspect avantageux de l'invention, ces reliefs ont une géométrie adaptée pour venir chacun en appui contre le bord de la perforation oblongue, la coopération de formes entre ces reliefs et ce bord assurant une immobilisation relative du barreau et du montant autour de l'organe de fixation.

On peut également prévoir que les reliefs sont aptes à être déformés, par le serrage de l'organe de fixation, de telle sorte qu'ils viennent en appui serré contre le bord de la perforation oblongue. Ainsi, la mise en place et le serrage de l'organe de fixation a pour effet d'écraser ces reliefs au point qu'ils viennent se bloquer contre le bord de la perforation oblongue.

Selon d'autres aspects avantageux de l'invention, on peut prévoir que les reliefs sont globalement coniques ou en forme de calotte sphérique et de diamètre maximum sensiblement égal à la plus petite dimension de la perforation oblongue.

En outre, dans le cas d'un barreau, un orifice de passage d'un organe de fixation et deux reliefs sont prévus à proximité de chacune des extrémités du barreau.

L'invention concerne également une échelle à câbles comprenant au moins un montant latéral et un barreau tels que précédemment décrits. Une telle échelle est plus rigide que les échelles de l'état de la technique alors que son prix de revient n'est pas sensiblement modifié par rapport à celles-ci.

L'invention concerne enfin un procédé de montage d'une échelle telle que précédemment décrite dans lequel on solidarise un barreau et un montant latéral en insérant un organe de fixation dans un orifice de ce barreau et une perforation de ce montant. Ce procédé consiste à positionner l'orifice et la perforation l'un par rapport à l'autre en introduisant dans cette perforation des reliefs disposés de part et d'autre de cet orifice.

L'invention sera mieux comprise et d'autres avantages de celle-ci apparaîtront plus clairement à la lumière de la description qui va suivre d'un mode de réalisation d'une échelle à câbles conforme à son principe, donné uniquement à titre d'exemple et fait en référence aux dessins annexés dans lesquels :
- la figure 1 est une représentation de principe d'une échelle conforme à l'invention ;
- la figure 2 est une vue à plus grande échelle du détail II à la figure 1 ;
- la figure 3 est une vue en perspective éclatée de la liaison entre un barreau et un montant latéral de l'échelle des figures 1 et 2 ;
- la figure 4 est une coupe selon la ligne IV-IV à la figure 2 et
- la figure 5 est une vue analogue à la figure 1 pour une échelle conforme à l'état de la technique.

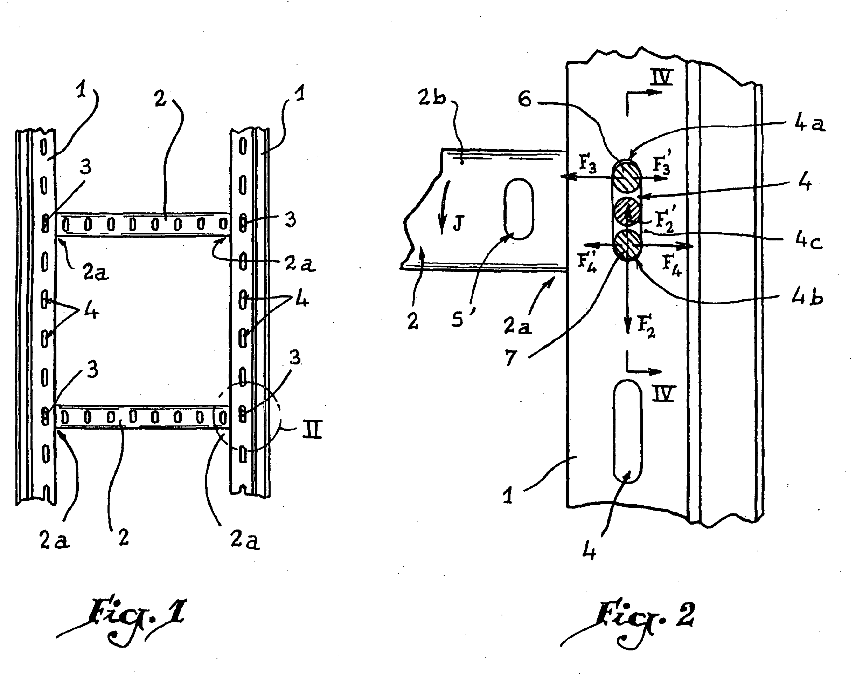

L'échelle à câbles représentée sur les figures 1 à 4 comprend deux montants latéraux 1 reliés par des barreaux 2 dont ils sont solidaires grâce à des rivets 3 prévus pour traverser à la fois des perforations oblongues 4 des montants 1 et un orifice cylindrique 5 prévu à proximité de chaque extrémité 2a d'un barreau 2.

Comme dans les dispositifs de l'état de la technique, les barreaux 2 sont pourvus de perforations oblongues 5' permettant le passage de liens de fixation des câbles que doit supporter l'échelle.

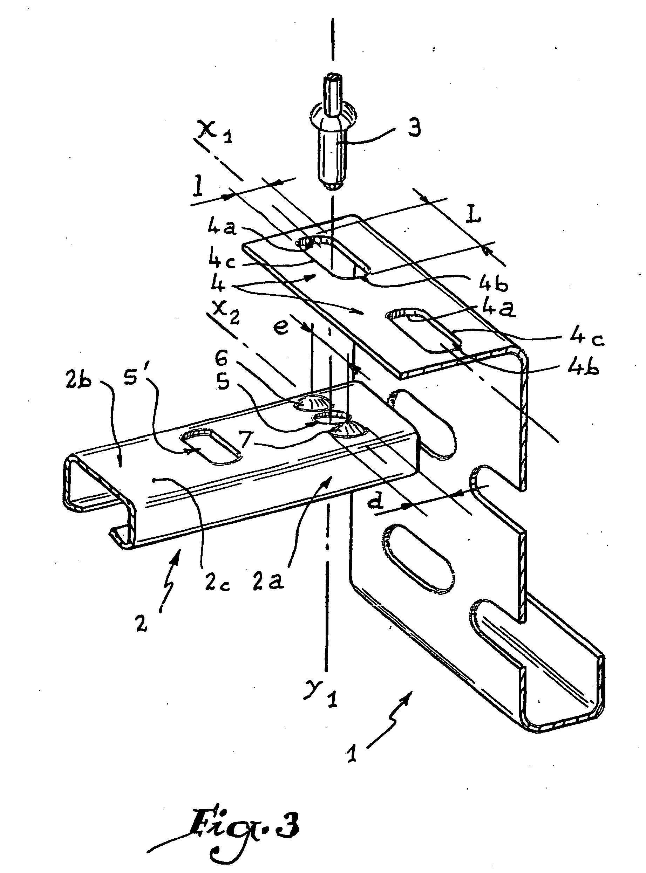

Comme il ressort plus clairement de la figure 3, deux bossages 6 et 7 sont prévus de part et d'autre de chaque orifice 5. Plus précisément, on note X₁ l'axe longitudinal des perforations 4 prévues sur une aile d'un montant 1. Les bossages 6 et 7 sont disposés de part et d'autre de l'orifice 5 selon une direction X₂ parallèle à l'axe X₁ en position assemblée des éléments 1 et 2. Les bossages 6 et 7 sont obtenus par matriçage ou emboutissage d'un voile central 2c du barreau 2.

Le montage de l'extrémité 2a d'un barreau 2 par rapport à un montant 1 a lieu en rapprochant l'orifice 5 de la partie centrale d'une perforation 4 et en introduisant, à travers la perforation 4 et l'orifice 5, un rivet 3, puis en déformant ce rivet pour bloquer les éléments 1 et 2 selon une direction Y₁ perpendiculaire à l'axe X₁.

Lors du mouvement de rapprochement de l'orifice 5 par rapport à la perforation 4, les bossages 6 et 7 sont introduits dans des zones extrêmes 4a et 4b de la perforation 4, de telle sorte qu'ils centrent l'orifice 5 par rapport à la perforation 4.

Les bossages 6 et 7 sont de forme globalement tronconique et l'on note d leur diamètre maximal, c'est-à-dire leur diamètre au niveau de la face supérieure 2b du voile central 2c du barreau 2. Par ailleurs, on note e l'écart entre les centres des bossages 6 et 7.

On note L la longueur d'une perforation 4 et l sa largeur. Le diamètre d est choisi sensiblement égal à la largeur l alors que l'écart e est choisi de telle sorte que la somme de sa valeur et du diamètre d soit sensiblement égale à la valeur de la longueur L. Ainsi, la coopération de formes entre les bossages 6 et 7 et le bord 4c de la perforation 4 permet un auto-centrage de l'orifice 5 par rapport à cette perforation.

Dans la configuration montée des éléments 1 et 2 qui est représentée aux figures 2 et 4, les bossages 6 et 7 subissent un effort de serrage F₁ résultant du serrage du rivet 3, cet effort ayant tendance à déformer des bossages 6 et 7 en les écrasant, de telle sorte que ceux-ci ont tendance à se dilater en direction du bord 4c de la perforation 4, ce qui améliore encore le contact entre les éléments 4c, 6 et 7.

Comme il ressort plus clairement de la figure 2, dans le cas d'une échelle verticale, le poids du barreau 2 s'exerce, au niveau de la jonction du barreau et du montant, selon une direction globalement verticale, comme représenté par la flèche F₂. Une force de réaction dirigée vers le haut représentée par la flèche F'₂ est générée au niveau du bord 4c de la perforation 4 et équilibre ce poids.

Par ailleurs, un moment J tendant à faire basculer le levier 2 dans le sens trigonométrique autour de l'axe du rivet 3 a pour effet de créer deux efforts F₃ et F₄ résultant dans un appui des bossages 6 et 7 respectivement contre le côté gauche du bord 4c au niveau de la zone 4a et le côté droit du bord 4c au niveau de la zone 4b. Deux forces de réaction équivalentes F'₃ et F'₄ sont alors générées par le montant 1, de telle sorte qu'un moment de réaction adapté au moment J est créé, ce qui évite toute déformation de l'échelle.

Il ressort de ce qui précède que le rivet 3 n'est pas soumis directement aux efforts F₂ et J.

Les cisaillements qui existent dans les dispositifs connus ne sont pas reproduits dans une échelle conforme à l'invention, ce qui permet d'en augmenter sensiblement la durée de vie. Des essais mécaniques ont confirmé une résistance largement accrue des points de fixation des barreaux 2 sur les montants 1.

Les bossages 6 et 7 peuvent avoir une configuration en forme de calotte sphérique et plus généralement toute configuration leur permettant de coopérer avec les bords des perforations 4. La dimension transversale des bossages 6 et 7 est avantageusement adaptée à la largeur de la perforation afin d'obtenir un effet d'auto-centrage.

Le caractère conique des bossages 6 et 7, et plus généralement le caractère progressif de leur largeur au fur et à mesure que l'on se rapproche de la face supérieure du barreau 2 permet d'assurer un contact tangentiel entre ces bossages et le bord de la perforation oblongue, y compris avec des produits galvanisés à chaud.

L'auto-centrage obtenu entre les barreaux et montants permet de faciliter grandement le montage d'une échelle à câbles, d'où un gain de temps et une économie substantielle. Compte tenu de ce que les rivets sont moins sollicités en cisaillement que dans l'état de la technique, leur section peut être diminuée en conséquence.

L'invention a été représentée avec un barreau équipé de bossages et prévu pour coopérer avec un montant pourvu de perforations oblongues. Bien entendu, on pourrait prévoir que les perforations oblongues sont prévues aux extrémités des barreaux alors que le ou les montants latéraux sont équipés d'orifices de petites dimensions bordés par des bossages.

L'invention a été représentée avec des reliefs formés par des bossages 6 et 7 de part et d'autre de l'orifice du barreau. Cependant d'autres formes de reliefs peuvent être employées, notamment des crevées rabattues ou embouties.

## Revendications

1. Barreau (2) pour échelle à câbles comprenant au moins un orifice (5) de passage d'un organe de fixation (3) sur un montant (1), **caractérisé en ce qu'**il comprend deux reliefs (6, 7) disposés de part et d'autre dudit orifice et aptes à être engagés dans une perforation oblongue (4) dudit montant dans laquelle est reçu ledit organe de fixation.

2. Montant pour échelle à câble comprenant au moins un orifice de passage d'un organe de fixation avec un barreau, **caractérisé en ce qu'**il comprend deux reliefs disposés de part et d'autre dudit orifice et aptes à être engagés dans une perforation oblongue dudit barreau dans laquelle est reçu ledit organe de fixation.

3. Barreau ou montant selon l'une des revendications 1 ou 2, **caractérisé en ce que** ledits reliefs sont formés par des bossages (6, 7) obtenus par déformation localisée d'un voile (2c) dudit barreau (2) ou dudit montant.

4. Barreau ou montant selon l'une des revendications précédentes, **caractérisé en ce que** lesdits reliefs (6, 7) ont une géométrie (d) adaptée pour venir chacun en appui contre le bord (4c) de ladite perforation oblongue (4), la coopération de formes entre lesdits reliefs et ledit bord assurant une immobilisation relative dudit barreau (2) et dudit montant (1) autour dudit organe de fixation (3).

5. Barreau ou montant selon l'une des revendications précédentes, **caractérisé en ce que** lesdits reliefs (6, 7) sont aptes à être déformés, par le serrage (F₁) dudit organe de fixation (3), de telle manière qu'ils viennent en appui serré contre le bord (4c) de ladite perforation oblongue (4).

6. Barreau ou montant selon l'une des revendications précédentes, **caractérisé en ce que** lesdits reliefs (6, 7) sont globalement coniques ou en forme de calotte sphérique et de diamètre maximum (d) sensiblement égal à la plus petite dimension (l) de ladite perforation oblongue (4).

7. Barreau selon l'une des revendications précédentes, **caractérisé en ce qu'**il comprend un orifice (5) de passage d'un organe de fixation (3) et deux reliefs (6, 7) à proximité de chacune de ses extrémités (2a).

8. Echelle à câbles comprenant au moins un montant (1) latéral et/ou un barreau (2) selon l'une au moins des revendications précédentes.

9. Procédé de montage d'une échelle à câbles dans lequel on solidarise un barreau (2) et un montant latéral (1) en insérant un organe de fixation (3) dans un orifice (5) et une perforation (4) prévus dans ledit barreau et ledit montant, **caractérisé en ce qu'**il consiste à positionner lesdits orifice et perforation l'un par rapport à l'autre en introduisant dans ladite perforation des reliefs (6, 7) disposés de part et d'autre dudit orifice.

## Claims

1. A rung (2) for a cable ladder comprising at least one opening (5) for the passage of a securing device (3) on a support (1), **characterised in that** it comprises two reliefs (6, 7) one to each side of the opening (5) and adapted to be engaged in an oblong aperture (4) of the said support in which the fixing device is disposed.

2. A support for a cable ladder comprising at least one opening for the passage of a fixing device for a rung, **characterised** it that it comprises two reliefs disposed one to each side of the opening and adapted to be engaged in an oblong aperture of the said rung in which the said fixing device is disposed.

3. A rung or support according to either one of claims 1 and 2, **characterised in that** the said reliefs are formed by bosses (6,7) obtained by local deformation of a web (2c) of the said rung (2) or support.

4. A rung or support according to any one of the foregoing claims, **characterised in that** the said reliefs have a geometry (d) such as to bring each into engagement against the edge (4c) of the oblong aperture (4), the conformity between the said reliefs and the said edge ensuring a relative immobility of the said rung (2) and support around the fixing device (3).

5. A rung or support according to any one of the foregoing claims, **characterised in that** the said reliefs (6, 7) are adapted to be deformed by the tightening of the fixing device (3), such that they come into tight contact against the edge (4c) of the said oblong aperture (4).

6. A rung or support according to any one of the foregoing claims, **characterised in that** the said reliefs (6, 7) are generally conical or in the form of a spherical cap and of maximum diameter (d) substantially equal to the smallest dimension (l) of the oblong aperture (4).

7. A rung according to any one of the foregoing claims, **characterised in that** it comprises an opening (5) for the passage of a fixing device and two reliefs (6, 7) near each of its ends (2a).

8. A cable ladder comprising at least a side support (1) and/or a rung (2) according to at least one of the foregoing claims

9. A method for the assembly of a cable ladder, in which a rung (2) and a side support (1) are firmly attached together by the insertion of a fixing device (3) in an opening (5) and an aperture (4) provided in the said rung and the said support, **characterised in that** it consists of positioning the said opening and aperture in alignment with each other and introducing into the aperture two reliefs (6, 7) disposed one to each side of the said opening.

## Patentansprüche

1. Sprosse (2) für eine Kabelleiter, die mindestens eine Durchgangsöffnung (5) für ein Befestigungsorgan (3) an einem Holm (1) aufweist, **dadurch gekennzeichnet, dass** sie zwei Erhebungen (6, 7) umfasst, die beidseitig der Öffnung angeordnet sind und ausgebildet sind, beidseitig eines Langlochs (4) des Holmes, in dem das Befestigungsorgan aufgenommen wird, in Eingriff zu treten.

2. Holm für eine Kabelleiter, der mindestens eine Durchgangsöffnung für ein Befestigungsorgan an einer Sprosse umfasst, **dadurch gekennzeichnet, dass** er zwei Erhebungen (6, 7) umfasst, die beidseitig der Öffnung angeordnet sind, und ausgebildet sind, beidseitig eines Langlochs (4) der Sprosse, in der das Befestigungsorgan aufgenommen wird, in Eingriff zu treten.

3. Sprosse oder Holm nach einem der Ansprüche 1 oder 2, **dadurch gekennzeichnet, dass** die Erhebungen als Buckel (6, 7) ausgebildet sind, die durch örtlich begrenzte Verformung einer Wandung (2c) der Sprosse (2) oder des Holmes erhalten werden.

4. Sprosse oder Holm nach einem der vorhergehenden Ansprüche , **dadurch gekennzeichnet, dass** die Erhebungen (6, 7) eine Geometrie (d) aufweisen, die derart angepasst ist, dass jede in Auflage gegen den Rand (4c) des Langlochs (4) kommt, wobei der Formenschluss zwischen den Erhebungen und dem Rand eine Festlegung der Sprosse (2) und des Holmes (1) relativ zueinander um das Befestigungsorgan (3) herum sicherstellt.

5. Sprosse oder Holm nach einem der vorhergehenden Ansprüche, **dadurch gekennzeichnet, dass** die Erhebungen (6, 7) geeignet sind, durch das Festziehen (F₁) des Befestigungsorgans (3) verformt zu werden, derart, dass sie in gepresste Auflage gegen den Rand (4c) des Langlochs (4) kommen.

6. Sprosse oder Holm nach einem der vorhergehenden Ansprüche, **dadurch gekennzeichnet, dass** die Erhebungen (6, 7) im Ganzen gesehen konisch oder in Form einer Kugelkalotte mit einem Maximaldurchmesser (d) im Wesentlichen gleich der kleinsten Abmessung (1) des Langlochs (4) ausgebildet sind.

7. Sprosse nach einem der vorhergehenden Ansprüche, **dadurch gekennzeichnet, dass** sie eine Durchgangsöffnung (5) für ein Befestigungsorgan (3) und zwei Erhebungen (6, 7) in der Nähe jedes ihrer Enden (2a) umfasst.

8. Kabelleiter mindestens einen Seitenholm (1) und/oder eine Sprosse (2) nach mindestens einem der vorhergehenden Ansprüche umfassend.

9. Verfahren zum Montieren einer Kabelleiter, bei dem eine Sprosse (2) und ein Seitenholm (1) miteinander verbunden werden, indem ein Befestigungsorgan (3) in eine Öffnung (5) und ein Loch (4) eingeführt wird, die in der Sprosse und dem Holm vorgesehen sind, **dadurch gekennzeichnet, dass** es darin besteht, die Öffnung und das Loch zueinander zu positionieren, indem in das Loch Erhebungen (6, 7) eingesetzt werden, die beidseitig der Öffnung angeordnet sind.
